(19) Europäisches Patentamt
European Patent Office
Office européen des brevets

(11) Veröffentlichungsnummer: **0 043 966**
**B1**

(12) # EUROPÄISCHE PATENTSCHRIFT

(45) Veröffentlichungstag der Patentschrift: **28.12.83**

(51) Int. Cl.[3]: **C 08 G 65/28**

(21) Anmeldenummer: **81104997.2**

(22) Anmeldetag: **27.06.81**

(54) **Verfahren zur Herstellung von Polyethern unter Erhalt von mindestens zwei freien Hydroxylgruppen am Startalkohol.**

(30) Priorität: **08.07.80 DE 3025807**

(43) Veröffentlichungstag der Anmeldung: **20.01.82 Patentblatt 82/03**

(45) Bekanntmachung des Hinweises auf die Patenterteilung: **28.12.83 Patentblatt 83/52**

(84) Benannte Vertragsstaaten: **AT BE CH DE FR GB IT LI LU NL SE**

(56) Entgegenhaltungen:
**DE-A- 2 136 572**
**GB-A- 2 020 702**
**H. STACHE "Tensid-Taschenbuch" 1979, CARL HANSER VERLAG, München**

(73) Patentinhaber: **Th. Goldschmidt AG**
**Goldschmidtstrasse 100 Postfach 101461**
**D-4300 Essen 1 (DE)**

(72) Erfinder: **Fock, Jürgen, Dr.**
**Mörsenbroicher Weg 114**
**D-4000 Düsseldorf 30 (DE)**

EP 0 043 966 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von Polyethern unter Erhalt von mindestens zwei freien Hydroxylgruppen am Startalkohol

Die Erfindung betrifft ein Verfahren zur Herstellung von Polyethern unter Erhalt von mindestens zwei freien Hydroxylgruppen am Startalkohol, wobei die Hydroxylgruppen durch höchstens drei Kohlenstoffatome voneinander getrennt sind und wobei die Hydroxylgruppe am Polyetherkettenende, gegebenenfalls reversibel, blockiert, jedoch gegenüber den Bedingungen der Acetal- oder Ketalspaltung stabil ist.

Die Erfindung geht von dem bekannten Stand der Technik aus, Oxirane an Verbindungen mit acidem Wasserstoff anzulagern. Verwendet man als Oxiran z. B. Ethylenoxid und als Startermolekül Wasser oder einen zweiwertigen Alkohol, z. B. Butandiol-1,4, so erhält man in Gegenwart eines Alkalialkoholates oder Alkalihydroxides Polyethylenoxide mit zwei Hydroxylendgruppen (Polyethylenglykole). Bei Verwendung eines einwertigen Alkohols, z. B. n-Butanol, erhält man Polyethylenglykolmonoether.

Derartige Polyalkylenoxide werden in kosmetischen und pharmazeutischen Präparaten verwendet. Blockcopolymerisate aus Ethylenoxid und Propylenoxid werden sehr häufig als nichtionogene Tenside verwendet. Dabei bilden die Polyethylenoxidblöcke den hydrophilen und die Polypropylenoxidblöcke den hydrophoben (lipophilen) Teil des Tensidmoleküls. Die maßgebenden Eigenschaften eines Tensids sind vom Verhältnis des hydrophilen und hydrophoben Anteils abhängig.

Für eine Reihe von Anwendungsfällen kommt es darauf an, Produkte einer besonders hohen Grenzflächenaktivität zu verwenden. Diese hohe Grenzflächenaktivität kann dadurch eingestellt werden, daß die hydrophilen und hydrophoben Teile des Moleküls räumlich voneinander getrennt und ausgeprägt vorhanden sind, d. h. daß das Tensidmolekül an einem Ende eine hohe Hydrophilie und am anderen Ende eine hohe Hydrophobie aufweist.

Der Erfindung liegt deshalb die Aufgabe zugrunde, Verbindungen herzustellen, welche an einem Molekülende durch die Anwesenheit mindestens zweier Hydroxylgruppen hohe Hydrophilie aufweisen, während am Kettenende der Polyethylenoxidkette die Hydroxylgruppe durch eine Schutzgruppe blockiert ist.

Der Erfindung liegt insbesondere die Aufgabe zugrunde, Polyether herzustellen, welche am Startalkohol mindestens zwei freie Hydroxylgruppen aufweisen. Bevorzugt sind dabei Polyethern bei denen mindestens eine der beiden Hydroxylgruppen eine primäre Hydroxylgruppe ist.

Die Aufgabe wird erfindungsgemäß dadurch gelöst, daß man

a) ein Oxiran der Formel

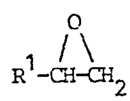

worin $R^1$ ein Wasserstoffrest oder eine gegebenenfalls halogenierte Kohlenwasserstoffgruppe mit 1 bis 30 Kohlenstoffatomen oder die Gruppe $CH_2OR^2$, in der $R^2$ eine Alkyl- oder Alkenylgruppe bedeutet, und wobei innerhalb des polymeren Moleküls die Gruppe $R^1$ gleich oder verschieden ist, an einen drei- oder mehrwertigen Alkohol, bei dem mindestens zwei Hydroxylgruppen acetalisiert oder ketalisiert sind, anlagert,

b) die Hydroxylgruppe des erhaltenen Polyethermonools durch Umsetzung mit einer in bezug auf diese Hydroxylgruppe reaktiven Gruppe einer monofunktionellen Verbindung, welche gegenüber den Bedingungen der Acetal- oder Ketalspaltung stabil ist, blockiert und dann

c) das Acetal oder Ketal durch Einwirkung von Säure spaltet.

Die Gruppe $R^1$ kann ein Wasserstoffrest sein. Es handelt sich dann bei dem Oxiran um Ethylenoxid. Die Gruppe $R^1$ kann eine Alkylgruppe mit 1 bis 30 Kohlenstoffatomen sein. Bevorzugt ist $R^1$ eine Alkylgruppe mit 1 bis 4, insbesondere 1 bis 2 Kohlenstoffatomen. Ist $R^1$ eine Methylgruppe, handelt es sich um Propylenoxid. Die Alkylgruppe kann gegebenenfalls halogniert sein und z. B. Chlorreste aufweisen. Beispiel einer solchen halogenierten Gruppe $R^1$ ist die $CH_2Cl$-Gruppe. Die Alkylgruppe kann auch ungesättigt sein. Beispiel einer solchen ungesättigten Alkylgruppe ist die Vinyl- oder Allylgruppe.

Die Gruppe $R^1$ kann auch eine Phenylgruppe, die gegebenenfalls substituiert ist, sein. Im einfachsten Falle handelt es sich bei dem Oxiran dann um Styroloxid.

Die Gruppe $R^1$ kann auch die Bedeutung der Gruppe $-CH_2-O-R^2$ haben, wobei $R^2$ eine Alkyl- oder Alkenylgruppe ist. Beispiel einer geeigneten Alkylgruppe ist die Butylgruppe ; Beispiel einer geeigneten Alkenylgruppe ist die Vinyl- oder Allylgruppe.

Als Oxirane können außer dem bereits genannten Ethylenoxid und Propylenoxid z. B. folgende Verbindungen verwendet werden : Butylenoxid ; Isobutylenoxid ; Epichlorhydrin ; Epibromhydrin ; Trifluormethylethylenoxid ; 1,2-Dichlor-3,4-epoxybutan ; 1,1-Dichlor-2,3-epoxybutan ; 1,1,1-Trichlor-3,4-epoxybutan ; Cyclohexanoxid ; Dipentenepoxid ; Methylglycidylether ; Ethylglycidylether ; Isopropylglycidylether ; tert.-Butylglycidylether ; n-Hexylglycidylether ; Ethylhexylglycidylether ; Vinylglycidylether ; Allylglycidylether ; Butadienmonooxid.

Innerhalb des polymeren Moleküls kann die Bedeutung der Gruppe $R^1$ gleich oder verschieden sein.

Der Polyether kann somit z. B. ganz oder teilweise aus Oxyethyleneinheiten aufgebaut sein. Von Interesse sind ferner Verbindungen, bei denen das Polymerisat aus Oxyethylen- und Oxypropyleneinheiten aufgebaut ist, bei denen die Einheiten statistisch oder in Blöcken im Molekül angeordnet sein können. Es sind aber auch alle anderen Kombinationen denkbar und möglich und werden im wesentlichen von den Eigenschaften bestimmt, die das herzustellende Polymerisat aufweisen soll.

Als Startalkohol können mehrwertige Alkohole, wie Glycerin, Trimethylolethan, Trimethylolpropan, Pentaerythrit, Pentite (Arabit, Adonit, Xylit), Hexite (Sorbit, Mannit, Dulcit), verwendet werden, bei denen mindestens zwei Hydroxylgruppen in acetalisierter oder ketalisierter Form vorliegen.

Die Acetale bzw. Ketale können aus den zugrunde liegenden Alkoholen in einfacher Weise durch Umsetzung mit Aldehyden, wie Formaldehyd, Acetaldehyd, n-Butyraldehyd, iso-Butyraldehyd, n-Valeraldehyd, iso-Valeraldehyd, n-Caproaldehyd, n-Heptaldehyd, Stearaldehyd, Acrolein, Crotonaldehyd, Benzaldehyd, Furfurol, oder Ketonen, wie Aceton, Methylethylketon, Methylpropylketon, Diethylketon, Hexanon, Methylisobutylketon, Dipropylketon, Diisopropylketon, Di-n-butylketon, Diisobutylketon, Stearon, Chloraceton, Dichloraceton, Cyclohexanon, Phoron, Benzophenon, Acetophenon, hergestellt werden.

Als Startalkohole sind insbesondere 2,2-Dimethyl-1,3-dioxolan-4-methanol und 2,2-Dimethyl-5-hydroxymethyl-5-ethyl-1,3-dioxan bevorzugt.

Die Anlagerung des Oxirans an die Startalkohole erfolgt in an sich bekannter Weise mit Katalysatoren, welchen den Acetal- oder Ketalring nicht aufspalten. Es verbietet sich somit die Verwendung saurer Katalysatoren. Die Anlagerung gelingt deshalb unter Verwendung der für derartige Anlagerungsreaktionen bekannten basischen Katalysatoren, wie z. B. Natriumhydroxid, Kaliumhydroxid, Calciumhydroxid, Magnesiumhydroxid sowie deren Alkoholate, insbesondere deren Methanolate. Zur Herstellung von Polymerisationsprodukten besonders hohen Molekulargewichtes haben sich die aus den US-Patentschriften 3 278 457, 3 278 458 und 3 278 459 bekannten Doppelmetallcyanatkomplexkatalysatoren besonders bewährt. Beispiele derartiger Katalysatoren sind Komplexverbindungen, insbesondere Zn-hexacyano-ferrat(III), Zn-hexacyanoferrit(II), Ni(II)-hexacyano-ferrat(II), Ni(III)-hexacyano-ferrat(III), Zn-hexacyano-ferrat(III)-hydrat, Co(II)-hexacyano-ferrat(III), Ni(II)-hexacyano-ferrat(III)-hydrat, Fe(II)-hexacyano-ferrat(III), Co(II)-hexacyano-cobaltat(III), Zn-hexacyano-cobaltat(III)-hydrat, die mit einem im wesentlichen wasserlöslichen, gesättigten, acyclischen, aliphatischen Polyether komplexiert sind, der frei von aktiven Wasserstoffatomen ist und ein Molekulargewicht bis zu etwa 400 aufweist.

Nach Anlagerung der gewünschten Oxiranmenge und Erreichen des geforderten Molekulargewichtes wird die am Polyetherkettenende befindliche Hydroxylgruppe blockiert. Diese Blockierung erfolgt durch eine Schutzgruppe, die jedoch unter den Bedingungen der Acetal- oder Ketalspaltung, d. h. unter Einwirkung verdünnter, wäßriger Säure bei mäßig erhöhten Temperaturen, stabil ist. Die Blockierung erfolgt mit einer Verbindung, welche monofunktionell ist und eine gegenüber der Hydroxylgruppe reaktive Gruppe aufweist. Dabei kann die Reaktion durch Substitution oder Addition erfolgen. Beispiel einer Substitutionsreaktion ist die Umsetzung der Hydroxylgruppe mit einem Alkylhalogenid, wobei der Kohlenwasserstoffrest 1 bis 4 Kohlenstoffatome aufweisen kann, oder einem Arylhalogenid. Beispiel einer geeigneten Additionsreaktion ist die Umsetzung der Hydroxylgruppe des Polyethers mit einem organischen Monoisocyanat, z. B. einem Alkyl- oder Arylmonoisocyanat.

Die Blockierung der freien Hydroxylgruppe an dem dem Startalkohol abgewandten Polyetherkettenende kann jedoch auch unter solchen Umständen erfolgen, daß, falls erwünscht, die Schutzgruppe wieder abgespalten werden kann. So ist es z. B. möglich, die Hydroxylgruppe mit einer organischen Monocarbonsäure oder einem Säurechlorid zu verestern. Durch Verseifung des Esters kann zu einem späteren Zeitpunkt die blockierende Gruppe abgespalten und die Hydroxylgruppe restituiert werden.

Nach der Blockierung der Hydroxylgruppe an dem dem Startalkohol abgewandten Polyetherkettenende wird nun in der Verfahrensstufe c) das Acetal oder Ketal aufgespalten, wobei die freien Hydroxylgruppen am Startalkohol rückgebildet werden. Die Spaltung des Acetals oder Ketals erfolgt in an sich bekannter Weise durch Einwirkung von Säure. Bevorzugt ist die Einwirkung von alkoholischer, wäßriger Halogenwasserstoff- oder Schwefelsäure bei Temperaturen von 60 bis 80 °C, wobei in der Regel eine Reaktionszeit von 2 bis 4 Stunden genügt.

Die nach dem erfindungsgemäßen Verfahren erhaltenen Verbindungen weisen ausgeprägte oberflächenaktive Eigenschaften auf, die insbesondere auf die einander benachbarten Hydroxylgruppen zurückzuführen sind. Sie stellen z. B. wertvolle Textilhilfsmittel dar, die sowohl als Emulgiermittel als auch als nichtionogene Waschmittel verwendet werden können. Sie können als Dismulgatoren für Öl/Öl- und Öl/Wasser-Emulsionen eingesetzt werden. Eine weitere Anwendung besteht als Egalisiermittel, als Antistatika und als Schlichtemittel. Sie zeigen ein ausgeprägtes Komplexbildungsvermögen, das insbesondere bei den 1,2-Diolen zu beobachten ist.

Das erfindungsgemäße Verfahren wird anhand der folgenden Beispiele noch näher erläutert.

## Beispiel 1

A) Durchführung der Polymerisation

In 132 g (ca. 1 Mol) 2,2-Dimethyl-4-hydroxymethyl-1,3-dioxolan werden mit einem scherkraftreichen

Rührer 5,5 g $Zn_3$ $[Co(CN)_6]$ komplexiert mit Dimethylglykol dispergiert. Das Gemisch wird in einen Reaktor mit einem zwangsfördernden Umlaufsystem gebracht. Nach sorgfältiger Spülung mit Reinstickstoff wird der Reaktor auf 110 °C geheizt und 2 630 g (ca. 45,3 Mol) Propylenoxid so schnell zugegeben, daß die Reaktorinnentemperatur einen Wert von 120 °C und der Druck einen Wert von 3 bar nicht überschreiten. Nach vollständiger Einleitung des Propylenoxids wird die Temperatur solange auf 120 °C gehalten, bis ein gleichbleibender Druck das Ende der Nachreaktion anzeigt; danach wird bei 80 bis 90 °C unter Vakuum die Entfernung von Restmonomeren vorgenommen.

Die Hydroxylzahl des vom Katalysator durch Filtration getrennten Produktes beträgt 19,1 ($\hat{=}$ $M_n$ = 2 940), und der Wassergehalt 0,08 %.

B) Blockierung des Polyetherols

2 940 g (1 Mol) des unter A) erhaltenen Polypropylenoxids werden nach Abtrennung des Katalysators und nach Zugabe von 3 g Dibutylzinndilaurat und 9 g Diazabicyclooctan unter Reinstickstoff auf 80 °C erwärmt. Sodann werden 104 g (ca. 1,05 Mol) n-Butylisocyanat zugetropft. Nach der vollständigen Zugabe erfolgt für 6 h bei 90 °C eine Nachreaktion. Das erhaltene Produkt ist klar und leicht gelblich gefärbt. Der NCO-Gehalt beträgt 0,15 %; die Hydroxylzahl 1,3.

C) Spaltung des Acetalringes

Der gemäß A und B hergestellte Polyether wird im Gewichtsverhältnis 2 : 1 : 1 mit 1 n wäßriger Salzsäure und Ethanol vermischt und für 4 h bei 80 °C unter Rückfluß erhitzt. Nach Beendigung der Reaktion werden alle flüchtigen Bestandteile im Bereich von 70 bis 80 °C bei einem Vakuum von 10 mm Hg-Säule abdestilliert; Restmengen an Wasser werden azeotrop mit Toluol entfernt.

Die Hydroxylzahl des erhaltenen klaren, leicht gelblichen Produktes beträgt 37, der Wassergehalt liegt unter 0,03 %. Die Bestimmung des Verhältnisses von primären und sekundären Hydroxylgruppen erfolgt durch $F^{19}$-Kernresonanzspektroskopie; als prozentuale Verteilung ergeben sich 49 % primäre und 51 % sekundäre Hydroxylgruppen.

## Beispiel 2

A) Durchführung der Polymerisation

In 132 g (ca. 1 Mol) 2,2-Dimethyl-4-hydroxymethyl-1,3-dioxolan werden bei 80 °C 1,75 g Kaliummethylat in einem Reaktor mit einem zwangsfördernden Umlaufsystem in Lösung gebracht. Danach wird wie in Beispiel 1 A verfahren, wobei 444 g (ca. 10,1 Mol) Ethylenoxid angelagert werden.

Nach Beendigung der Reaktion werden 10 g Wasser bei 80 °C eingerührt. Anschließend werden 7 g 30 %ige Phosphorsäure zugegeben, es wird 0,25 h gerührt und mit $NaH_2PO_4$ auf einem pH-Wert von 7 eingestellt. Danach wird das Wasser bei 80 bis 90 °C in einem Vakuum von 10 mm Hg-Säule abdestilliert und das Produkt mit 10 g eines Filterhilfsmittels auf Silikatbasis abfiltriert.

Die Hydroxylzahl des farblosen, klaren Produktes beträgt 99,8 ($\hat{=}$ $M_n$ = 562) und der Wassergehält 0,1 %.

B) Blockierung des Polyetherols

Es wird verfahren wie in Beispiel 1 B, wobei 562 g (1 Mol) des in 2 A erhaltenen Polyethers mit 104 g (ca. 1,05 Mol) n-Butylisocyanat zum Einsatz kommt.

Das erhaltene Produkt ist klar und leicht gelblich gefärbt. Der NCO-Gehalt beträgt 0,18 % und die Hydroxylzahl 1,4.

C) Spaltung des Acetalringes

Es wird verfahren wie in Beispiel 1 C. Die Hydroxylzahl des erhaltenen Polyethers beträgt 177,2; dies entspricht bei einer theoretischen OH-Zahl von 179,6 einem Umsatz von 99 % der Theorie.

## Beispiel 3

In der in Beispiel 2 beschriebenen Weise werden Polyethylenoxide hergestellt, indem 15,20 und 30 Mol Ethylenoxid (EO) an ein Mol 2,2-Dimethyl-4-hydroxymethyl-1,3-dioxolan (DHD) angelagert werden. Die Blockierung erfolgt mit n-Butylisocyanat und die sich anschließende Spaltung des Ketals mit verdünnter wäßriger Salzsäure und Ethanol. Die nachfolgende Tabelle zeigt die Hydroxylzahlen bzw. das Molekulargewicht ($M_n$) der erhaltenen Polyether nach der Alkoxilierung ($OHZ_A$), der Blockierung ($OHZ_B$) und der Spaltung ($OHZ_S$).

| Mol EO / Mol DHD | $OHZ_A$ | $M_n$ | $OHZ_B$ | $OHZ_S$ |
|---|---|---|---|---|
| 15 | 71,5 | 785 | 1,5 | 140,5 |
| 20 | 56,7 | 990 | 1,8 | 114,3 |
| 30 | 39,6 | 1415 | 2,0 | 79,0 |

Beispiel 4

A) Durchführung der Polymerisation

Es wird verfahren wie in Beispiel 2 A, jedoch werden anstelle von 2,2-Dimethyl-4-hydroxymethyl-1,3-dioxolan 174 g (ca. 1 Mol) 2,2-Dimethyl-5-ethyl-5-hydroxymethyl-1,3-dioxan eingesetzt, an die zunächst 440 g (ca. 10 Mol) Ethylenoxid und anschließend 580 g (ca. 10 Mol) Propylenoxid angelagert werden. Die Hydroxylzahl des erhaltenen Produktes beträgt 48,0 ($\hat{=} M_n = 1\,169$). Die Blockierung erfolgt durch Umsetzung von 1 169 g Polyether mit 89,2 g (1,05 Mol) i-Propylisocyanat in der in Beispiel 1 B beschriebenen Weise ; die Hydroxylzahl beträgt 1,3, der NCO-Gehalt 1,4 %. Gemäß Beispiel 1 C erfolgt die Spaltung des Ketals. Die Hydroxylzahl des erhaltenen Polyethers beträgt 96,3, der Wassergehalt liegt unter 0,15 %. Die Bestimmung des Verhältnisses von primären und sekundären Hydroxylgruppen durch $F^{19}$-Kernresonanzspektroskopie ergibt eine prozentuale Verteilung von 99 % bzw. 1 %.

Beispiel 5

Es wird verfahren wie in Beispiel 4 mit der Ausnahme, daß Ethylenoxid und Propylenoxid im Gemisch angelagert werden. Die Hydroxylzahl des erhaltenen Produktes beträgt 46,0 ($\hat{=} M_n = 1\,220$) ; der Wassergehalt liegt unter 0,15 %. Nach Blockierung und Spaltung beträgt die Hydroxylzahl 90,5. Die Bestimmung des Verhältnisses von primären und sekundären Hydroxylgruppen ergibt eine prozentuale Verteilung von 98 % bzw. 2 %.

Beispiel 6

Es wird verfahren wie in Beispiel 1 A mit der Ausnahme, daß anstelle von 2,2-Dimethyl-4-hydroxymethyl-1,3-dioxolan 176 g (ca. 1 Mol) 2,2-Dimethyl-5,5-dihydroxymethyl-1,3-dioxan eingesetzt werden. Die Hydroxylzahl des erhaltenen Produktes beträgt 40,5 ($\hat{=} \overline{M}_n = 2\,770$).

Die Blockierung erfolgt durch Umsetzung von 2 770 g Polyetherdiol mit 304 g (2,4 Mol) Benzylchlorid, indem in Gegenwart von 3 g Tetrabutylammoniumjodid, 300 g $Na_2CO_3$ gelöst in 1 000 ml Wasser bei 100 °C für 5 h unter Stickstoff erwärmt wird. Wasser wird nach Beendigung der Reaktion durch Destillation bei 10 mm Hg-Säule und auschließend Salz durch Filtration mit einem Filterhilfsmittel auf Silikatbasis entfernt. Die Spaltung des Ketals erfolgt, indem im Gewichtsverhältnis 1 : 1 : 1 1 n wäßrige Schwefelsäure und Ethanol vermischt und 8 h lang unter Rückfluß erhitzt werden. Nach Beendigung der Spaltungsreaktion wird das noch heiße Reaktionsgemisch mit 50 %iger wäßriger Natronlauge neutralisiert. Anschließend werden alle flüchtigen Bestandteile im Bereich von 70 bis 80 °C bei einem Vakuum von 10 mm Hg-Säule abdestilliert. Das anfallende $Na_2SO_4$ läßt sich unter Verwendung eines Filterhilfsmittels auf Silikatbasis in der Wärme vollständig abscheiden.

Die Hydroxylzahl des erhaltenen Polyethers beträgt 38,6, der Wassergehalt liegt unter 0,1 %. Die Bestimmung des Verhältnisses von primären zu sekundären Hydroxylgruppen ergibt eine Verteilung von 99 % bzw. 1 %.

**Ansprüche**

1. Verfahren zur Herstellung von Polyethern unter Erhalt von mindestens zwei freien Hydroxylgruppen am Startalkohol, wobei die Hydroxylgruppen durch höchstens drei Kohlenstoffatome voneinander getrennt sind und wobei die Hydroxylgruppe am Polyetherkettenende, gegebenenfalls reversibel, blockiert, jedoch gegenüber den Bedingungen der Acetal- oder Ketalspaltung stabil ist, dadurch gekennzeichnet, daß man

a) ein Oxiran der Formel

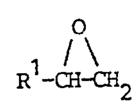

worin $R^1$ ein Wasserstoffrest oder eine gegebenenfalls halognierte Kohlenwasserstoffgruppe mit 1 bis 30 Kohlenstoffatomen oder die Gruppe $—CH_2OR^2$, in der $R^2$ eine Alkyl- oder Alkenylgruppe bedeutet, und wobei innerhalb des polymeren Moleküls die Gruppe $R^1$ gleich oder verschieden ist, an einen drei- oder mehrwertigen Alkohol, bei dem mindestens zwei Hydroxylgruppen acetalisiert oder ketalisiert sind, anlagert,

b) die Hydroxylgruppe des erhaltenen Polyethermonools durch Umsetzung mit einer in bezug auf diese Hydroxylgruppe reaktiven Gruppe einer monofunktionellen Verbindung, welche gegenüber den Bedingungen der Acetal- oder Ketalspaltung stabil ist, blockiert und dann

c) das Acetal oder Ketal durch Einwirkung von Säure spaltet.

2. Verfahren nach Anspruch 1, dadurch gekennzeichnet, daß man in Stufe a) das Oxiran an 2,2-Dimethyl-1,3-dioxolan-4-methanol anlagert.

3. Verfahren nach Anspruch 1, dadurch gekennzeichnet, daß man in Stufe a) das Oxiran an 2,2-Dimethyl-5-hydroxymethyl-5-ethyl-1,3-dioxan anlagert.

4. Verfahren nach Anspruch 1, dadurch gekennzeichnet, daß man in der Verfahrensstufe b) die Hydroxylgruppe des Polyethermonools mit organischen Isocyanaten oder Alkyl- oder Arylhalogeniden umsetzt.

5. Verfahren nach Anspruch 1, dadurch gekennzeichnet, daß man das Acetal oder Ketal durch Einwirkung alkoholischer, wäßriger Halogewasserstoff- oder Schwefelsäure bei Temperaturen von 60 bis 80 °C spaltet.

**Claims**

1. Process for the preparation of polyethers with at least two free hydroxyl groups being retained on the starting alcohol, the hydroxyl groups being separated from one another by at most three carbon atoms and the hydroxyl group at the end of the polyether chain being blocked, optionally reversibly, but stable towards the conditions of acetal or ketal splitting, characterised in that

a) an oxirane of the formula

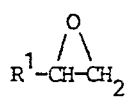

in which $R^1$ denotes a hydrogen radical, an optionally halogenated hydrocarbon group with 1 to 30 carbon atoms or the group $—CH_2OR^2$, in which $R^2$ denotes an alkyl or alkenyl group, and wherein the groups $R^1$ within the polymeric molecule are identical or different, is added onto a trihydric or polyhydric alcohol in which at least two hydroxyl groups are acetalised or ketalised,

b) the hydroxyl group of the resulting polyether-monool is blocked by reaction with a group, which is reactive in respect of this hydroxyl group, of a monofunctional compound which is stable under the conditions of acetal or ketal splitting, and

c) the acetal or ketal is then split by the action of acid.

2. Process according to Claim 1, characterised in that the oxirane is added onto 2,2-dimethyl-1,3-dioxolane-4-methanol in stage a).

3. Process according to Claim 1, characterised in that the oxirane is added onto 2,2-dimethyl-5-hydroxymethyl-5-ethyl-1,3-dioxane in stage a).

4. Process according to Claim 1, characterised in that the hydroxyl group of the polyether monool is reacted with organic isocyanates or alkyl or aryl halides in process stage b).

5. Process according to Claim 1, characterised in that the acetal or ketal is split by the action of alcoholic, aqueous hydrogen halide acid or sulphuric acid at temperatures from 60 to 80 °C.

**Revendications**

1. Procédé de production de polyéthers conservant au moins deux groupes hydroxyles libres sur l'alcool de départ, les groupes hydroxyles étant séparés par trois atomes de carbone au maximum et les groupes hydroxyles sur la chaîne polyéther étant bloqués, le cas échéant de façon réversible, mais stables dans les conditions de coupure acétalique ou cétalique, caractérisé en ce que l'on

a) fixe par addition un oxiranne de formule

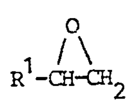

où $R^1$ signifie un reste hydrogène ou un groupe hydrocarboné éventuellement halogéné avec 1 à 30 atomes de carbone ou le groupe $—CH_2OR^2$, dans lequel $R^2$ signifie un groupe alkyle ou alcényle et où à

l'intérieur de la molécule polymère, le groupe $R^1$ est le même ou est différent, sur un alcool trifonctionnel ou plus dans lequel au moins deux groupes hydroxyles sont acétalisés ou cétalisés,

b) on bloque le groupe hydroxyle du polyéther-monoalcool obtenu par réaction avec un groupe réactif vis-à-vis de ce groupe hydroxyle, d'un composé monofonctionnel, qui est stable dans les conditions de la coupure acétalique ou cétalique, et qu'ensuite

c) on coupe l'acétal ou le cétal par un acide.

2. Procédé suivant la revendication 1, caractérisé en ce que l'on fixe dans l'étape a) l'oxiranne sur le 2,2-diméthyl-1,3-dioxolanne-4-méthanol.

3. Procédé suivant la revendication 1, caractérisé en ce que l'on fixe dans l'étape a) l'oxiranne sur le 2,2-diméthyl-5-hydroxyméthyl-5-éthyl-1,3-dioxanne.

4. Procédé suivant la revendication 1, caractérisé en ce que dans l'étape b) du procédé on fait réagir le groupe hydroxyle du polyéthermonoalcool avec des isocyanates organiques ou avec des halogénures d'alkyle ou d'aryle.

5. Procédé selon la revendication 1, caractérisé en ce que l'on coupe l'acétal par action d'acides halohydriques ou sulfurique hydroalcooliques à des températures de 60 à 80 °C.